Europäisches Patentamt

European Patent Office

Office européen des brevets

(11) Veröffentlichungsnummer: **0 237 729**
**A1**

## (12) EUROPÄISCHE PATENTANMELDUNG

(21) Anmeldenummer: **87100990.8**

(22) Anmeldetag: **24.01.87**

(51) Int. Cl.⁴ **H01M 4/02** , H01M 4/60

(30) Priorität: **06.03.86 DE 3607378**

(43) Veröffentlichungstag der Anmeldung:
**23.09.87 Patentblatt 87/39**

(84) Benannte Vertragsstaaten:
**DE FR GB SE**

(71) Anmelder: **VARTA Batterie Aktiengesellschaft
Am Leineufer 51
D-3000 Hannover 21(DE)**

(72) Erfinder: **Nägele, Dieter, Dr. Dipl.-Chem.
Gudastrasse 2
D-6520 Worms(DE)**
Erfinder: **Köhler, Gernot, Dr. Dipl.-Chem.
Berner Weg 32
D-6700 Ludwigshafen(DE)**
Erfinder: **Bittihn, Rainer, Dr. Dipl.-Phys.
Königsberger Strasse 34
D-6233 Kelkheim(DE)**

(74) Vertreter: **Kaiser, Dieter Ralf, Dipl.-Ing.
Gundelhardtstrasse 72
D-6233 Kelkheim/Ts.(DE)**

(54) **Elektrochemisches Sekundärelement mit mindestens einer Polymerelektrode.**

(57) Gegenüber Polymerelektroden, deren Elektrodenträger (2) gewöhnlich mit einer einzigen kompakten Schicht der aktiven Polymerverbindung beaufschlagt ist, wird durch Dickenaufteilung der Schicht (1) in mehrere übereinandergestapelte dünne Filmschichten eine wesentlich höhere flächenspezifische Kapazität und Strombelastbarkeit der Elektrode erzielt. Noch günstiger wirkt sich die Stapelanordnung in Verbindung mit einer Perforation der dünnen Schichten aus. Die Kombination dieser Maßnahmen kommt bei Betrieb des Sekundärelements mit hohen Strömen besonders zum Tragen.

## Elektrochemisches Sekundärelement mit mindestens einer Polymerelektrode

Die Erfindung betrifft ein elektrochemisches Sekundärelement mit mindestens einer Elektrode, deren aktives Material aus einer mit Kationen oder Anionen dotierbaren Polymerverbindung von polykonjugierter Struktur besteht, die durch den Herstellungsgang als dünne, filmartige Schicht ausgebildet ist.

Polymere mit polykonjugierter Struktur der Hauptkette sind im Grunde Isolatoren. Erst durch die Arbeiten insbesondere von Heeger und Mc Diarmid (J. Chem. Soc. Chem. Comm. 1977,578) wurde offenbar, daß das organische Polymer Polyacetylen in Gestalt eines dünnen Films durch Umsetzung mit Oxidantien wie Jod, Brom oder Arsenpentafluorid eine beträchtliche Leitfähigkeit erlangt, welche die Leitfähigkeit im Grundzustand um Größenordnungen übertrifft. Das Ergebnis der Oxidation (Entzug von y Elektronen) des Polyacetylens sind defektelektronenleitende Polymerketten $(CH^{+Y})_x$, zu deren Stabilisierung eine entsprechende Menge reduzierten Oxidationsmittels A angelagert wird, so daß das oxidierte Polyacetylen die Zusammensetzung $(CH^{+Y} A^{-}_y)_x$ aufweist. Wird z.B. Jod als Oxidationsmittel verwendet, so werden $J_3^{-}$-Ionen als stabilisierende Gegenionen aufgenommen. Nun ist ebenfalls durch Heeger und Mc Diarmid bekannt geworden, daß die Oxidation des Polyacetylens nicht nur, wie oben beschrieben, auf chemischen Wege, bei der der Anstieg der Leitfähigkeit durch eine Ladungsübertragung zwischen Polymer und Oxidationsmittel zustande kommt, sondern auch auf elektrochemischem Wege erreicht werden kann. Darüber hinaus läßt sich das Polyacetylen in einer elektrochemischen Zelle nicht nur oxidieren, sondern auch unter wiederum ansteigender Leitfähigkeit, die auf einen Elektronenüberschuß entlang den Polymerketten zurückführbar ist, reduzieren.

Zu diesem Zweck werden zwei Polymerfolien mit metallischen Ableitern (z.B. Platin) versehen und in eine Leitsalzlösung (z.B. Lithiumperchlorat ($LiClO_4$) in Propylencarbonat (PC) getaucht.

Beim Anlegen einer Spannung an diese Anordnung werden dem einen Polymer Elektronen entzogen und dem anderen Polymer Elektronen zugeführt, d.h. das eine Polymer wird, einhergehend mit einer dem Ladungsumsatz entsprechenden Leitfähigkeitssteigerung, oxidiert, und das andere Polymer, ebenfalls unter einer entsprechenden Leitfähigkeitssteigerung, reduziert. Zur Stabilisierung der entstandenen Radikalkationen und Radikalanionen nehmen die Polymere nun eine entsprechende Anzahl von Anionen und Kationen - (im dargestellten Beispiel als $ClO_4$-bzw. $Li^+$-Ionen) auf.

Die auf elektrochemischem Wege in den leitfähigen Zustand versetzten Polymerverbindungen bilden neuerdings interessante Elektrodenmaterialien, insbesondere für Sekundärbatterien, weil sich ihre elektrochemische Oxidation und Reduktion reversibel durchführen läßt. Die EP-OS 111 237 beispielsweise nennt eine Reihe bisher bekannter elektrochemischer Systeme auf Polymerbasis.

Die Herstellung des Polymermaterials selbst differiert von Substanz zu Substanz. Ein Polyacetylenfilm zum Beispiel läßt sich durch Inberührungbringen des entsprechenden Monomeren mit einer konzentrierten Lösung eines Ziegler-Katalysators in einem inerten Lösungsmittel herstellen. So entsteht beim Aufblasen von Acetylen auf eine ruhende Oberfläche der Katalysatorlösung eine dünne Polyacetylenschicht, die auf der Oberfläche schwimmt und vom Reaktionsmedium unversehrt abgehoben werden kann. In einer Variante dieses Verfahrens kann man einen inerten Träger, z.B. eine Glasplatte, mit der Katalysatorlösung benetzen und so auf diesem eine leicht abziehbare Polymerschicht erzeugen.

Eine andere Herstellungsmethode, die u.a. gemäß DE-OS 3 402 133 zur direkten Erzeugung eines elektronisch leitenden Polypyrrols, Polythiophens oder Polyanilins angewandt werden kann, ist die Elektropolymerisation. In diesem Fall wird das Polymer entweder aus einer wässrigen oder organischen Lösung des Monomeren, die als Elektrolysebad ein Salz mit für die Oxidation geeigneten Anionen enthält, durch anodischen Strom auf einer elektronisch leitfähigen Oberfläche abgeschieden.

Bei Entladeversuchen an solchen Elektroden hat es sich nun gezeigt, daß die Entladedauer bei konstant gehaltener Entladespannung über proportional mit der Schichtdicke anwächst, mit der die Polymerfilme bei der elektrochemischen Oxidation anfallen. Mithin ist es nicht möglich, einen im Verhältnis zur Polymerisationsdauer und damit zur Polymerfilmdicke stehenden Ladungsumsatz in vertretbaren Zeiten zu erzielen.

Der Erfindung liegt die Aufgabe zugrunde, ein elektrochemisches Sekundärelement nach dem eingangs formulierten Gattungsbegriff anzugeben, dessen Polymerelektrode bzw. dessen Polymerelektroden gegenüber den bekannten Ausführungen über eine verbesserte flächenspezifische Kapazität, auch bei hohen Strömen, d.h. kurzen Lade-und Entladezeiten, verfügen.

Die Aufgabe wird erfindungsgemäß dadurch gelöst, daß auf dem flächigen Elektrodenableiter mindestens zwei Polymerschichten geringer Dicke aufgebracht sind.

Die Herstellung der erfindungsgemäßen Elektrode kann z.B. auf folgenden Wegen geschehen:

0 237 729

Entweder werden dem bereits bei der Herstellung des Polymerisats entstandenen Ableiter-Polymer-Verbund weitere (selbsttragende) Polymerfilme aufgelegt, oder es werden auf einem blanken Ableiter mehrere, zuvor auf einem anderen Substrat erzeugte Polymerfilme aufgelegt.

Vorzugsweise geeignete Elektrodenmaterialien sind Polyacetylen, Polypyrrol, Polythiophen oder Polyanilin.

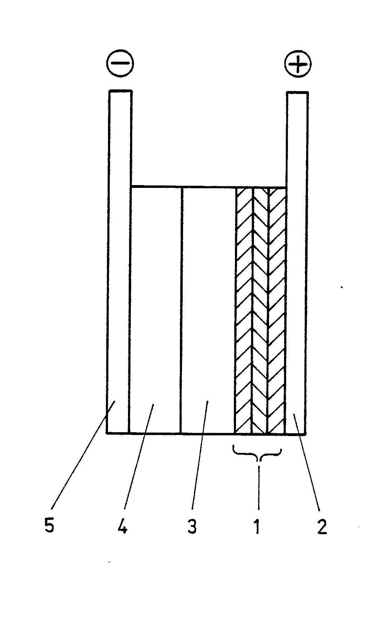

In der Figur ist der prinzipielle Aufbau eines Sekundärelements gemäß der Erfindung dargestellt.

Anstelle einer einzigen dicken Schicht ist die Polymerauflage 1 des positiven Ableiters 2 in mehrere dünne Filmschichten (hier z.B. aus 3 Lagen bestehend) aufgeteilt. Als negative Gegenelektrode 4 mit negativem Ableiter 5 kann z.B. Lithium oder ebenfalls ein Polymer, vorzugsweise in der erfindungsgemäßen Stapelanordnung aus dünnen Schichten, verwendet werden. Der zwischengelegte Separator 3 ist zugleich Elektrolytspeicher. Überraschenderweise wurde gefunden, daß solche "Stapelelektroden" gegenüber "Massivelektroden" der gleichen flächenspezifischen Kapazität und damit Dicke eine bessere Kinetik zeigen; d.h. die Srombelastbarkeit bei gleichem Ladungsumsatz steigt beträchtlich an.

In einer besonders vorteilhaften Ausführungsform der Erfindung sind die stapelförmig auf dem Ableiter angeordneten Polymerschichten gelocht, um einen "ungehinderten" Zugang des Elektrolyten zu tiefer liegenden Polymerschichten zu gewährleisten, wodurch die Elektrode ein besonders gutes kinetisches Verhalten zeigt.

Die Anordnung der Löcher auf den Polymerschichten kann unregelmäßig oder regelmäßig sein. Die relative Anordnung der Löcher in einer Polymerschicht zu Löchern in einer anderen Polymerschicht kann auf Lücke oder fluchtend erfolgen, wobei sich die letztgenannte Anordnung wegen des besseren Zugangs des Elektrolyten zu den "unteren" Polymerschichten, d.h. den Schichten, deren Oberfläche nicht mit dem Elektrolyten in direktem Kontakt steht, als vorteilhaft erwiesen hat. Dies gilt insbesondere für Elektroden aus mehr als zwei Polymerschichten.

Die Größe bzw. der Durchmesser der Löcher beträgt vorzugsweise mindestens 10 $\mu$m; nach oben können keine allgemein gültigen maximalen Werte angegeben werden. Der maximale Durchmesser der Löcher und deren Zahl pro Flächeneinheit wird bestimmt durch die Elektrodenfläche und die erforderliche Stabilität des gelochten Polymerfilms.

Im allgemeinen hat es sich als günstig erwiesen, viele kleine Löcher statt weniger großer Löcher in den Folien anzubringen. Es versteht sich von selbst, daß die Zahl der Löcher abängig ist vom Durchmesser der einzelnen Löcher. Es ist auch nicht erforderlich, daß alle Löcher gleich groß sind.

Der Anteil der Gesamtfläche der Löcher unterliegt an sich keiner besonderen Beschränkung, doch haben sich Lochflächen von 10 -80%, besonders von 25 -70%, bezogen auf die Gesamtfläche der Polymerschicht als besonders vorteilhaft erwiesen.

Die Anzahl der übereinandergelagerten Polymerfilme ist an sich ebenfalls nicht kritisch; in der Praxis werden jedoch üblicherweise nicht mehr als 40, vorzugsweise nicht mehr als 30 Polymerschichten übereinandergelagert. Die Dicke der einzelnen Schichten beträgt im allgemeinen 20 -100 $\mu$m, so daß sich insgesamt eine Dicke der übereinandergelagerten Schichten und damit der Elektrode bis zu 10 mm, vorzugsweise nicht mehr als 8 mm ergibt, wenn zwischen den einzelnen Polymerschichten noch Separatorschichten angeordnet sind. Solche Separatorschichten sind nicht zwingend erforderlich, können jedoch Vorteile mit sich bringen.

Die Lochung der Polymerfilme kann sowohl durch Nadelung oder Ausstechen als auch durch Laser- oder Schwerionenbeschuß erfolgen, wobei die integrale Lochfläche 50% der Elektrodenfläche nicht überschreiten sollte.

Beispiele

Durch die nachfolgend beschriebenen Versuche konnte das überlegene elektrische Verhalten erfindungsgemäßer Polymerelektroden bestätigt werden.

Auf Platinblechen als Ableiter waren einmal zwei 55$\mu$m starke Polypyrrolschichten erfindungsgemäß in Stapelform, sowie als Vergleichsmuster eine kompakte Einzelfolie entsprechender Stärke (110 $\mu$m) aufgelegt. Eine zusätzliche Versuchsvariante bestand in einer Lochung (je 100 Löcher mit 0,5 mm Durchmesser) jeweils einer Stapel-und einer Massivelektrode. Die geometrische Elektrodenfläche betrug in allen vier Fällen 8,82 cm² und das Gewicht des jeweils eingesetzten Polypyrrols ca. 120 mg. Das Polypyrrol enthielt herstellungsbedingt bis zu 50 Gew.-% Gegenionen und Lösungsmittel. Die Herstellung solcher Folien kann z.B. nach dem in der DE OS 32 23 544 beschriebenen Verfahren erfolgen.

3

Mit diesen Testelektroden ausgerüstete Versuchszellen enthielten als Gegenelektroden Lithiumfolien in einer Stärke von 200μm und als Elektrolyt eine 0,5 normale Lösung von Lithiumperchlorat in Propylencarbonat.

Die Zellen wurden unter galvanostatischen Bedingungen einer Zyklisierung unterworfen, wobei die Ladung der Polymeren bis 4 Volt und die Entladung bis zu einer Spannung von 2 V, jeweils gegen eine Lithiumreferenzelektrode gemessen, erfolgte.

In der nachstehenden Tabelle 1 sind die unter einigen ausgewählten Zyklenbedingungen (Stromstärke und Nummer des jeweiligen Zyklus) erhaltenen Ladungsumsätze (Ah/kg) zusammengestellt. Dabei ist die Bedingung 0,15 mA/cm² (Lade-und Entladestrom) gleichbedeutend mit einer langsamen Zyklenfolge, die "Hochstrombedingung" 2,2 mA/cm² gleichbedeutend mit einer extrem raschen Zyklisierung. Die in Tabelle 1 angegebenen Prozentzahlen geben den Ladewirkungsgrad an: 100% bedeuten restlose Rückgewinnung der eingeladenen Kapazität beim Entladen.

Die in Tabelle 1 angegebenen Beispiele 1 - 4 hatten folgende Bedeutung:

Beispiel 1:(Vergleichsbeispiel)

Auf einem Platinblech als Ableiter wurde eine Polypyrrolschicht mit einer Dicke von 110 μm aufgebracht.

Beispiel 2:

Auf einem Platinblech als Ableiter wurden 2 Polypyrrolschichten mit einer Dicke von je 55 μm aufgebracht.

Beispiel 3:

Auf einem Platinblech als Ableiter wurden 2 Polypyrrolschichten mit einer Dicke von je 55 μm aufgebracht, die mit einer Lochung von je 100 Löcher mit 0,5 mm Durchmesser versehen waren.

Beispiel 4:

Auf einem Platinblech als Ableiter wurde eine Polypyrrolschicht mit einer Dicke von 110 μm aufgebracht, die mit einer Lochung von 100 Löchern mit je 0,5 mm Durchmesser versehen war.

**Tabelle 1**

Flächenspezifische Kapazitäten (in Ah/kg) und Ladewirkungsgrad (Stromausbeute, in %) von positiven Polypyrrolelektroden mit unterschiedlicher Schichtstruktur in Abhängigkeit von den zyklischen Lade-/Entladeströmen (mA/cm²)

| Beispiel | 1 | 2 | 3 | 4 |
|---|---|---|---|---|
| Lade-/ Entlade- strom | | | | |
| 0,15 mA/cm² (5. Zyklus) | 65 99% | 63 99% | 63 99% | 65 98% |
| 0,6 mA/cm² (20. Zyklus) | 35 99% | 38 100% | 53 100% | 44 100% |
| 2,2 mA/cm² (20. Zyklus) | 7 96% | 11 100% | 17 100% | 9 100% |

Die Zahlen der Tabelle weisen für die schwache Zyklenbelastung mit 0,15 mA/cm² noch keine signifikanten Unterschiede im Kapazitätsverhalten der verschiedenen Elektrodenmuster aus.

Dagegen verbessert sich bei der Zyklisierung mit 0,6 mA/cm² die flächenspezifische Kapazität des erfindungsgemäßen Elektrodenmusters 2 bereits um 8% gegenüber dem Wert für die Kompaktschicht-Elektrode (35 Ah/kg), des erfindungsgemäßen Elektrodenmusters 3 sogar um 50%.

Ein ebenfalls sehr günstiges Kapazitätsverhalten konnte unter den gleichen Versuchsbedingungen auch bei der perforierten Kompaktschicht-Elektrode 4 festgestellt, nich aber bei der Zyklenbehandlung mit dem "Hochstrom" 2,2 mA/cm² bestätigt werden. Bei dieser extremen Belastung mit rascher Zyklenfolge wirken sich die erfindungsgemäßen Haßnahmen indessen besonders deutlich aus. die Kapazitätssteigerung gegenüber der Kompaktschicht-Elektrode (7 Ah/kg) beträgt bei dem Elektrodenmuster 2 57%, bei dem Elektrodenmuster 3 140%.

**Ansprüche**

1. Elektrochemisches Sekundärelement mit mindestens einer Elektrode, deren aktives Material aus einer mit Kationen oder Anionen dotierbaren leitfähigen organischen Polymerverbindung von polykonjugierter Struktur besteht, die durch den Herstellungsgang als dünne filmartige Schicht ausgebildet ist, dadurch gekennzeichnet, daß auf dem flächigen Elektrodenableiter mindestens zwei dieser Polymerschichten geringer Dicke aufgebracht sind.

2. Elektrochemisches Sekundärelement nach Anspruch 1, dadurch gekennzeichnet, daß die Polymerschichten gelocht sind.

3. Elektrochemisches Sekundärelement nach Anspruch 1 oder 2, dadurch gekennzeichnet, daß die filmartigen Polymerschichten in Gegenwart eines Ziegler-Katalysators durch Abscheidung aus einer Lösung des zugrundeliegenden Monomeren in einem inerten Lösungsmittel an einem inerten Träger hergestellt worden sind.

4. Elektrochemisches Sekundärelement nach Anspruch 1 oder 2, dadurch gekennzeichnet, daß die filmartigen Polymerschichten durch Elektropolymerisation des zugrundeliegenden Monomers in einem Elektrolysebad auf einer elektrisch leitfähigen Oberfläche hergestellt worden sind.

5. Elektrochemisches Sekundärelement nach Anspruch 4, dadurch gekennzeichnet, daß die dem Elektrodenableiter unmittelbar anliegende Polymerschicht am Ableiter selbst als Abscheidungsoberfläche bei der Elektropolymerisation gebildet ist.

6. Elektrochemisches Sekundärelement nach den Ansprüchen 2 -5, dadurch gekennzeichnet, daß der Durchmesser der Löcher mindestens 10 μm beträgt.

7. Elektrochemisches Sekundärelement nach einem der Ansprüche 1 bis 6, dadurch gekennzeichnet, daß die Polymerverbindung Polyacetylen, Polypyrrol, Polythiophen oder Polyanilin ist.

⊖ ⊕

5 4 3 1 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 136 099 (HOXAN CORP.) * Zusammenfassung; Seite 9, Zeile 20 - Seite 14, Zeile 17 * | 1,3,7 | H 01 M 4/02 H 01 M 4/60 |
| Y | | 1,2,4, 5,7 | |
| Y | DE-A-3 333 034 (NIPPONDENSO CO.) * Patentansprüche; Seite 7, Zeilen 5-15; Seite 8, Zeilen 5-9 * | 2,7 | |
| Y | DE-A-3 421 796 (NIPPON DENSO CO.) * Zusammenfassung; Seite 7, Zeile 6 - Seite 11, Zeile 23 * | 1,3,4, 5,7 | |
| A | PATENT ABSTRACTS OF JAPAN, Band 8, Nr. 142 (E-254)[1579], 3. Juli 1984; & JP-A-59 51 483 (SHOWA DENKO K.K.) 24-03-1984 * Insgesamt * | 1 | RECHERCHIERTE SACHGEBIETE (Int. Cl.4) H 01 M 4/02 H 01 M 4/60 H 01 M 10/40 |
| A | PATENT ABSTRACTS OF JAPAN, Band 10, Nr. 145 (E-407)[2202], 28. Mai 1986; & JP-A-61 8855 (NIPPON DENSHIN DENWA KOSHA) 16-01-1986 * Insgesamt *      -/- | 1,4,7 | |

Der vorliegende Recherchenbericht wurde für alle Patentansprüche erstellt.

| Recherchenort DEN HAAG | Abschlußdatum der Recherche 17-06-1987 | Prüfer DE VOS L.A.R. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 084 330 (BAYER AG) <br> * Zusammenfassung; Seite 4, Zeile 19 - Seite 7, Zeile 13 * <br><br> --- | 1,7 | |
| A | CHEMICAL ABSTRACTS, Band 97, 1982, Seite 522, Zusammenfassung Nr. 13867r, Columbus, Ohio, US; K.W. WILLMAN et al.: "Viologen homopolymer, polymer mixture and polymer bilayer films on electrodes. Electropolymerization, electrolysis, spectroelectrochemistry, trace analysis and photoreduction", & J. ELECTROANAL. CHEM. INTERFACIAL ELECTROCHEM. 1982, 133(2), 211-31 <br> * Insgesamt * <br><br> --- | 1,4 | |
| A | EP-A-0 098 988 (B.A.S.F.) <br> * Zusammenfassung; Seite 3, Zeile 9 - Seite 4, Zeile 18; Seite 8, Zeile 31 - Seite 9, Zeile 13; Seite 13, Zeilen 11-17 * <br><br> ----- | 1,4 | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 17-06-1987 | DE VOS L.A.R. |